# EUROPEAN PATENT SPECIFICATION

(11) **EP 3 254 967 B1**
(45) Date of publication and mention of the grant of the patent: **04.09.2019**
(21) Application number: 16190629.2
(22) Date of filing: 26.09.2016
(51) Int. Cl.: B64D 11/00

(54) **INTERIOR COMPONENT FOR AN AIRCRAFT AND AIRCRAFT WITH AN INTERIOR COMPONENT**
INNENKOMPONENTE FÜR EIN FLUGZEUG UND FLUGZEUG MIT EINER INNENKOMPONENTE
ÉLÉMENT D'INTÉRIEUR POUR UN AÉRONEF ET AÉRONEF ÉQUIPÉ D'UN ÉLÉMENT D'INTÉRIEUR

(30) Priority: 06.06.2016 EP 16173169; 06.06.2016 EP 16173150; 05.07.2016 EP 16178035; 05.07.2016 EP 16178037
(43) Date of publication of application: 13.12.2017
(73) Proprietor: Airbus Operations GmbH, 21129 Hamburg (DE)
(72) Inventor: Metten, Martin, 21129 Hamburg (DE); Benthien, Hermann, 21129 Hamburg (DE); Hinrichs, Marcus, 21129 Hamburg (DE); Telkamp, Michael, 21129 Hamburg (DE); Müller, Florian, 21129 Hamburg (DE); Tincani, Tancredi, 21129 Hamburg (DE); Schmitt, Ralph, 21129 Hamburg (DE)
(74) Representative: Schicker, Silvia

(56) References cited:
- DE-A1-102007 014 464
- DE-A1-102007 061 423
- DE-A1-102011 108 895
- US-A- 5 083 727
- US-A- 5 347 434
- US-A1- 2006 091 257
- US-A1- 2008 112 753
- US-B1- 9 090 351

## Description

The present invention relates to an aircraft comprising an interior component. In particular, the present invention relates to an an aircraft comprising an overhead luggage component connected to a primary structure of the aircraft via an interior component carrier system.

The interior structure of an aircraft consists of linings, monuments, ceiling elements, overhead luggage compartments and further components covering the primary structure and/or system equipment of the aircraft, such as harnesses. Above the seat rows of the aircraft this interior structure usually comprises the same components along a longitudinal axis of the aircraft, such as overhead luggage compartments, personal service units (PSUs) and cove light panels. The arrangement of these interior components is usually permanent over most of the lifespan of the aircraft, since system equipment, such as wiring, air conditioning ducts, etc., runs behind and between the interior components.

The interior structure or interior components can be connected to the primary structure of the aircraft (e.g. frames, stringers, outer skin, etc.) via an interior component carrier system. The interior component carrier system creates a space in which system equipment can be installed. In addition, the interior component carrier system provides connecting points for one or more interior components.

Overhead storage bins are for example disclosed in prior art document US2006/091257. It is an object of the present invention to provide an interior component that allows a flexible interior design of the cabin of the aircraft, while covering system equipment in an interior component carrier system.

This object is solved by an aircraft as defined in independent claim 1. Preferred embodiments are defined by the dependent claims.

An aircraft comprises an interior component carrier system installed to a primary structure of the aircraft, the interior component carrier system including a rod-shaped carrier element and an attachment device coupled to the carrier element. An overhead luggage compartment comprises a back wall connected to the attachment device. The back wall has an indentation directed away from the interior component carrier system, the indentation having a shape corresponding to at least part of the attachment device and at least part of the rod-shaped carrier element when the back wall is connected to the attachment device.

The interior component carrier system can be installed to the primary structure of the aircraft at one or more installation rails. The primary structure of an aircraft typically comprises a plurality of stringers extending substantially parallel to each other along a longitudinal axis of an aircraft fuselage and carrying the aircraft outer skin. A plurality of frames that extend substantially parallel to each other in a circumferential direction of the aircraft fuselage are attached to the stringers via suitable fastening cleats protruding from the stringers in a direction towards an interior of the aircraft fuselage, e.g. towards the cabin of the aircraft. In order to allow the interior component carrier system to be securely fastened to the aircraft's primary structure, each of the installation rails preferably comprises a plurality of connecting portions arranged one behind another in a direction along an x-axis, i.e. a longitudinal axis of the aircraft. Each of the installation rails comprises at least one connecting portion which is connectable to an associated primary structure component in order to fasten the installation rail to the primary structure component. For example, each connecting portion may be connectable to an associated fastening cleat protruding from a stringer and serving to attach a frame to the stringer.

Further, each of the installation rails comprises a carrier portion extending from the connecting portion in a direction along a longitudinal axis of the interior component carrier system. Each carrier portion may comprise two arms extending parallel to each other in a direction along the longitudinal axis of the interior component carrier system. A plurality of openings arranged one behind another in the direction along the longitudinal axis of the interior component carrier system may be formed in the carrier portions, i.e. the arms of the carrier portions, wherein associated openings formed in the arms of the carrier portions may be aligned with each other.

The interior component carrier system further comprises at least one carrier element having a first end and a second end. The first end of the carrier element is connected to the carrier portion of one of the installation rails. Preferably, the carrier element is fastened to the carrier portion of the installation rail by means of at least one fastener designed, for example, in the form of a bolt which is guided through associated aligned openings formed in the arms of the carrier portion of the installation rail. When the interior component carrier system is installed in an aircraft, the carrier element preferably extends substantially parallel to a z-axis of the aircraft, i.e. an axis extending substantially perpendicular to an aircraft cabin floor.

Since the interior component carrier system is installed between a primary structure of the aircraft and the overhead luggage compartment, the luggage compartment has one face facing the interior component carrier system (and also the primary structure of the aircraft) and another face facing the cabin of the aircraft (i.e. away from the interior component carrier system). The indentation is formed in the back wall on the face facing the interior component carrier system.

The indentation can be formed only on the face facing the interior component carrier system. Additionally, the first wall can include a bulge on the face facing the cabin of the aircraft. The bulge can have a shape corresponding to the at least part of the interior component carrier system. In other words, the material forming the first wall has a substantially constant thickness and deviates from a main plane of the first wall in a region corresponding to the shape of the indentation.

The indentation has a shape corresponding to a portion of an attachment device of the interior component carrier system facing the cabin of the aircraft. Thus, a portion of the attachment device, which faces the cabin of the aircraft, is received in the indentation. The overhead luggage bin is connected to the attachment device. Such connection can be achieved via a snap and click fastener, a threaded bolt and nut fastener, an adhesive, welding or other fastening technique.

The indentation has a shape further corresponding to a carrier element of the interior component carrier system. The attachment device is coupled to the carrier element. The carrier element includes a rod or bar, at which the attachment device can be coupled at any desired position along a longitudinal axis of the carrier element. The indentation of the back wall of the overhead luggage component has a shape so that the portion of the attachment device and at least a portion of the carrier element are received within the indentation. In other words, the back wall of the overhead luggage compartment has an external shape covering a portion of the attachment device and carrier element, i.e. to be flush with at least a portion of an outer surface of the attachment device and carrier element. This provides for an optimal utilization of the space within the aircraft. Additionally, the indentation of the back wall of the overhead luggage compartment can have a shape further corresponding to other portions of the interior component carrier system, such as another carrier element. The carrier element can extend substantially parallel to the Z-axis of the aircraft, i.e. the axis extending substantially perpendicular to a floor of the aircraft cabin. The attachment device can be coupled with the carrier element at any desired height, i.e. at any desired position along the extent of the carrier element. Additionally or alternatively, the carrier element can be extendable in a lengthwise direction, i.e. along the Z-axis when connected to the installation rail(s). Thus, in any case a predefined distance between the floor of the aircraft cabin and the overhead luggage compartment connected to the attachment device can be set.

The back wall can include multiple indentations corresponding to the number of attachment devices, to which the back wall is connected, and/or corresponding to the number of carrier elements. The back wall can have a substantially rectangular shape, including a flat shape except for the indentation(s), i.e. outside of the indentations the back wall lies substantially in one plane. Alternatively, the back wall can be convex or concave, e.g., traversing through a space defined by the interior component carrier system.

Alternatively or additionally, the overhead luggage compartment can further comprise a second wall forming a portion of a ceiling of the aircraft cabin and being connectable, i.e. adapted to be connected, to a primary structure fastening element. The second wall may form an angle with the back wall. Furthermore, the second wall can follow the shape of the primary structure of the aircraft. Thereby, the second wall covers the primary structure, i.e. forms a ceiling (or ceiling lining) of the aircraft cabin. The second wall can be attached to the back wall. Alternatively, the second wall is formed integrally with the back wall. The overhead luggage compartment may be made from a plastic material, e.g. by a moulding process.

A ceiling of the overhead luggage compartment also may form a ceiling of the aircraft cabin, since it covers a portion of the primary structure from being visible from the inside of the aircraft cabin.

The overhead luggage bin can be a fixed bin or a movable bin. The fixed bin is provided with a movable lid or hatch covering an opening of the fixed overhead luggage bin. Opposed to that, the movable bin includes a tray for carrying luggage. The tray moves, e.g. rotates around hinges, in order to provide access to the tray. The tray can be closed and latched, so that it forms together with the ceiling a closed overhead luggage compartment.

Furthermore, at least one of the back wall and the second wall can be arranged in a space limited by an outer skin of the aircraft and one or more primary structural elements of the aircraft. For example, the back wall and/or the second wall can be formed, i.e. can have a shape, extending into a space limited by the primary structure of the aircraft. This space can be formed by the outer skin (and insulation) of the aircraft and two adjacent frames. Since this space is often unused, the back wall and/or the second wall can be formed to extend into this space, so that it can be utilized for other purposes. For instance, in particular the second wall forming a ceiling of an overhead luggage compartment may have a shape following the primary structure of the aircraft, so that the space between two adjacent frames is available for the storage of luggage. In other words, the interior space of the overhead luggage compartment can be provided with a greater height than usual overhead luggage compartments. Alternatively, the overhead luggage compartment can be installed at a higher position with respect to the floor of the aircraft cabin, so that more headspace is provided, e.g. above seat rows of the aircraft.

One or more overhead luggage compartments can be installed, followed by linings, e.g. in an area of the aircraft cabin where emergency exits are located. At the end of the area having linings, a monument (e.g., a separating wall, a galley or a sanitary monument) can be installed that is connected to the interior component carrier system. Then further overhead luggage compartments and/or linings or monument(s) can be installed, etc..

This allows a flexible interior design of the cabin of the aircraft.

Preferred embodiments of an interior component are described in greater detail with reference to the attached schematic drawings in the following, wherein
- Figure 1: shows a cross-sectional view of an interior component connected to an interior component carrier system in the form of a movable overhead luggage bin,
- Figure 2: shows a cross-sectional view of an interior component connected to an interior component carrier system in the form of a fixed overhead luggage bin,
- Figure 3: shows a cross-sectional view of an interior component and details of the shape of a first wall of the interior component,
- Figures 4A, 4B: shows a cross-section in a plan view direction and a side view of a first wall of the interior component, respectively, and
- Figure 5: shows a cross-sectional view of an interior component extending into a space limited by elements of the primary structure of the aircraft.

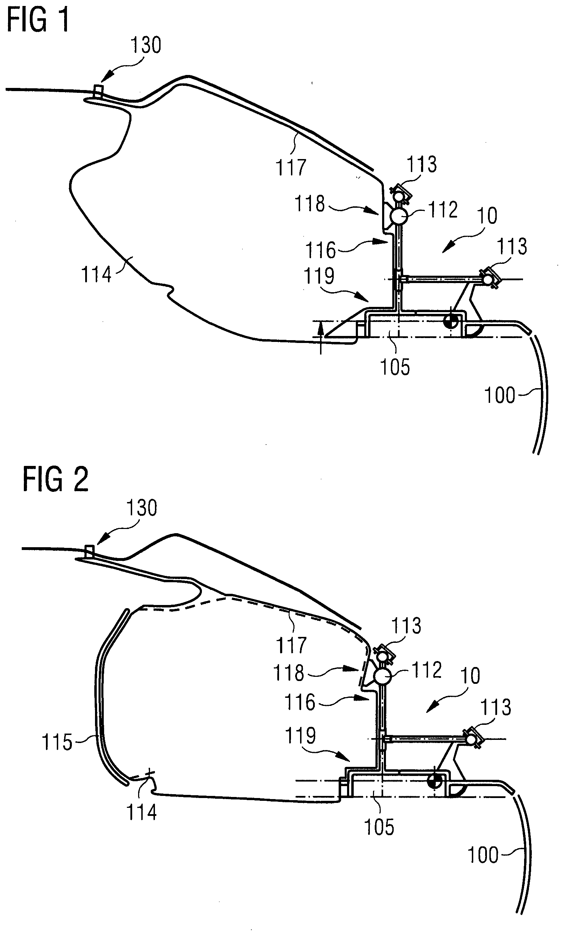

Figure 1 shows a cross-sectional view of an interior component 114 having a first wall 116. In the arrangement shown in the drawing, the second interior component 114 is designed in the form of an overhead luggage compartment. In particular, Figure 1 illustrates the interior component 114 in the form of a movable overhead luggage bin, where parts of the overhead luggage compartment are rotatable with respect to, e.g. the first wall 116 to provide access into the compartment. The first wall 116, therefore, forms a back wall of the overhead luggage compartment 114. The first wall 116 is connectable, i.e. adapted to be connected, to an interior component carrier system 10. The first wall 116 is configured to carry at least a portion of the loads of the interior component 114, such as loads introduced by further parts of the overhead luggage compartment 114 and the luggage. The overhead luggage compartment can include further parts, such as hinges, sidewalls, etc., which are not depicted in Figure 1 for clarity reasons.

As illustrated in Figure 1, the interior component carrier system 10 comprises several elements, such as an attachment device 112 and one or more rod-like carrier elements 111 that are connected directly or indirectly to one or more installation rails 113. The attachment device 112 is adapted to establish, for example, a snap and click connection between the interior component 114 and the interior component carrier system 10. The interior component carrier system 10 provides space for the installation of system equipment, such as personal service units (PSUs) 105, electric wiring, air ducts, etc. (not shown). Loads of the interior component 114 are transferred from the first wall 116 into the interior component carrier system 10 via the attachment device 112.

Furthermore, the interior component carrier system 10 can further include elements forming a lining between the interior component 114 and a side wall lining 100 attached to a sidewall of the fuselage of the aircraft.

The first wall 116 of the interior component 114 is provided with an indentation 118 directed towards the cabin of the aircraft. As illustrated in Figure 1, the indentation 118 can be provided in a region where the interior component 114 is connected to the attachment device 112. Thus, the indentation 118 has a shape corresponding to at least part of the interior component carrier system 10. Figure 1 illustrates a further indentation 119 provided in a bottom part of the first wall (the lower portion in Figure 1). This further indentation 119 has a shape corresponding to a PSU channel 105 of the interior component carrier system 10. This shape of the first wall 116 allows a good utilization of the space available next to the interior component carrier system 10.

The interior component 114 can further comprises a second wall 117 forming a portion of the ceiling of the aircraft cabin. The second wall 117 can be connectable, i.e. is adapted to be connected, to a primary structure fastening element 130. A snap and click connection can be established with the primary structure fastening element 130. Thus, the interior component 114 has only two attachment points in a cross-section thereof, i.e. at primary structure fastening element 130 and attachment device 112. It is to be understood, that in a Y-axis of the aircraft, i.e. perpendicular to a drawing plane of Figure 1, additional attachment points may be arranged. This allows a quick installation of the interior component 114. In addition, the interior component 114 can be quickly removed for replacement or in order to reach system equipment installed within the space formed by the interior component carrier system 10. This reduces the downtime of the aircraft.

In addition, conventional overhead luggage compartments include such system equipment, e.g., PSUs and an associated PSU channel. After removal and re-installation of a conventional overhead luggage compartment, technical approval (admittance) of the system equipment (e.g. PSU channel) was required. The interior component 114, according to the present disclosure, is independent of the installation of the system equipment. Thus, technical approval of the system equipment after maintenance and/or replacement of an interior component is not required anymore. This further reduces the downtime of the aircraft.

Figure 2 shows a cross-sectional view of an interior component 114 designed in the form of a fixed overhead luggage compartment bin. Such overhead luggage compartment includes a movable lid 115, while the tray receiving the luggage is fixed. The elements corresponding to those of the movable overhead luggage compartment bin illustrated in Figure 1 have the same reference numerals and their explanation will be omitted. The interior component 114 illustrated in Figure 2 also includes a first wall 116 having an indentation 118 directed towards the cabin of the aircraft and having a shape corresponding to at least part of the interior component carrier system 10. As illustrated, the indentation 118 is provided at an attachment device 112, to which the first wall 116 is connected. A further indentation 119 is provided at a bottom part of the overhead luggage compartment 114 corresponding to a shape of the interior component carrier system 10, here the PSU channel 105.

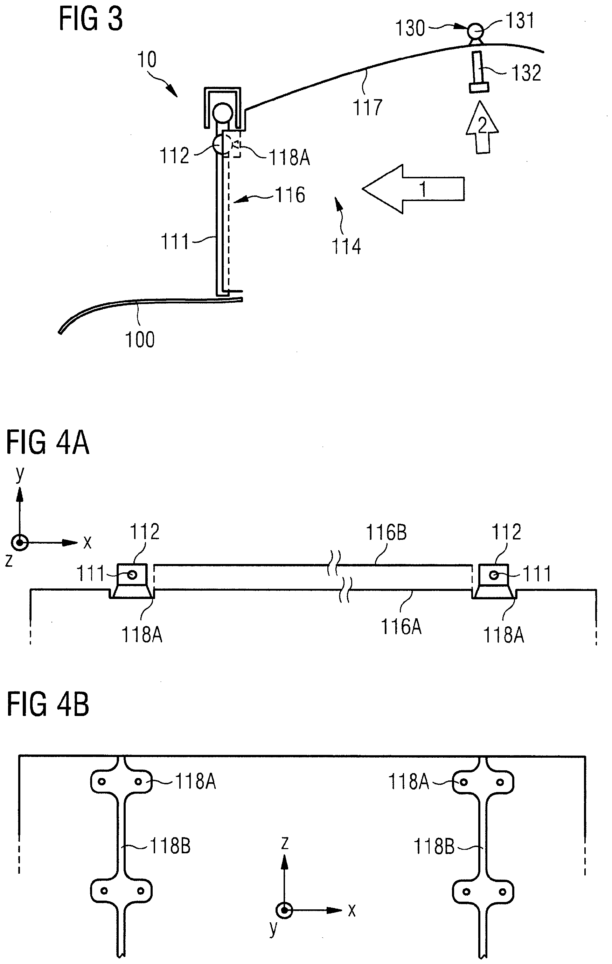

Furthermore, Figure 3 shows a cross-sectional view of an interior component 114 designed in the form of a lining. The lining 114 includes a first wall 116 and a second wall 117. The first wall 116 covers the interior component carrier system 10 and is provided with an indentation 118 corresponding to at least part of the interior component carrier system 10. In detail, the first wall 116 includes an indentation 118A corresponding to a portion of the attachment device 112 and further includes an indentation 118B corresponding to a portion of a carrier element 111 of the interior component carrier system 10.

The second wall 117 as illustrated in Figure 3 is designed to be integrally formed with the first wall 116. The second wall 117 can be connected to a primary structure (not shown) via a fastening means 130. For this purpose, the second wall 117 may simply be provided with a hole or bore, through which a bolt 132 fits. In order to install the interior component 114, it can first be attached to the interior component carrier system 10 (as illustrated by the arrow marked with "1"), e.g. connected to attachment device 112. Afterwards, the bolt 132 can be inserted into the hole or bore of the second wall 117 and can be inserted into a primary structure fastening element 131 for connecting the second wall 117 thereto (as illustrated by the arrow marked with "2").

It is to be understood, that the interior component 114 may consist only of the first wall 116. In this case, the interior component 114 forms a lining covering the interior component carrier system 10. The ceiling of the aircraft cabin may then be formed by a different element, for example an element spanning the entire crown of the aircraft cabin.

Figure 4A shows a cross-section of the first wall 116 in a plan view direction thereof, for example a cross-section of the first wall 116 in a plane parallel to the floor of an aircraft cabin. The drawing includes two alternatives on how the first wall 116 can be formed with respect to the elements of the interior component carrier system 10. Two attachment devices 112 are illustrated, each of which is connected to a carrier element 111, such as a rod or bar. The first wall 116 is connected to the attachment devices 112. The first wall 116A, according to the first alternative, is provided in a main plane lying in front of the carrier element 111. The first wall 116A has two indentations 118A, one for each attachment device 112. Thus, the majority of the interior form of the first wall 116A is flat, with the exception of the indentations 118A. This avoids obstacles for pieces of luggage that can be stored in an overhead luggage compartment.

In case the interior component 114 forms a lining, the visible surface of the lining appears almost even. Alternatively, the lining 114 may have a varying thickness, so that a visible side face of the first wall 116 is flat, while the indentation 118A is only present at a face of the first wall 116 facing towards the interior component carrier system 10.

According to the second illustrated alternative depicted in Figure 4A, more space may be provided, for example, for luggage stored in an overhead luggage compartment constituting the interior component 114. Here the first wall 116B is located closer to the primary structure of the aircraft, i.e. further into the space defined by the interior component carrier system 10. The indentations 118A are then deeper, receiving (almost) the entire attachment device 112.

Figure 4A illustrates the first wall 116B only between the two attachment devices 112. It is to be understood, that alternatively the first wall 116B can extend on both sides of the attachment devices 112, i.e. over the entire width of the interior component 114 (i.e., over the entire extent along the X-axis of the aircraft). This form of the first wall 116B allows a better utilization of the space at the interior component carrier system 10. In addition, the first wall 116A, 116B can have a bulgy shape, such as a convex or concave form. For instance, the first wall 116 may traverse a space defined by the interior component carrier system 10, i.e. in Figure 4A such first wall lies more to the top of the drawing. Such bulgy form provides additional space, for example, in case of an overhead luggage compartment.

The indentations 118 can have any shape corresponding to at least part of the interior component carrier system 10. For example, only the indentations 118A may be necessary for receiving portions of the attachment devices 112. In addition, as illustrated in the side view of the first wall 116 shown in Figure 4B, the indentation 118 can consist of indentation 118A corresponding to a portion of the attachment device 112 and an indentation 118B corresponding to a portion of the carrier element 111. For instance, in case of the alternative of the first wall 116B, an indentation 118B would be necessary for receiving a portion of the carrier element 111. Such a form of indentations provides the best utilization of the space at the interior component carrier system 10. Moreover, it would also be possible to introduce any forces in the direction of the X-axis of the aircraft via the surfaces of the indentations 118A and 118B.

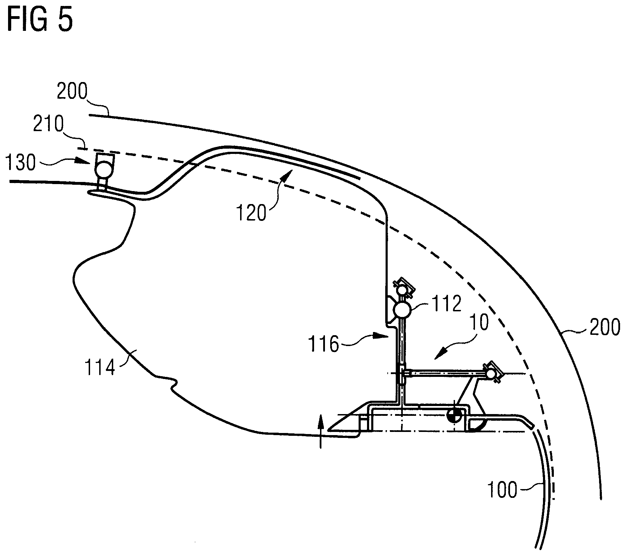

Figure 5 shows a further alternative form of the interior component 114 in a cross-sectional view of thereof. Here the interior component 114 is again illustrated in the form of an overhead luggage compartment. It is to be understood that this alternative implementation can be employed to any interior component 114. At least part of the first wall 116 and/or the second wall 117 are arranged in a space 120 limited by the primary structure of the aircraft. In detail, a space limited by the outer skin 200 and primary structural elements 210, such as adjacent frames, can be used as a further storage space 120 within the overhead luggage compartment 114 or further head clearance space 120 of a ceiling lining 114.

## Claims

1. An aircraft, comprising:
an interior component carrier system (10) installed to a primary structure of the aircraft, wherein the interior component carrier system (10) includes a rod-shaped carrier element (111) and an attachment device (112) coupled to the carrier element (111); and
an overhead luggage compartment (114) comprising:
- a back wall (116) connected to the attachment device (112) of the interior component carrier system (10), wherein the back wall (116) has an indentation (118) directed away from the interior component carrier system (10), the indentation having a shape corresponding to at least part of the attachment device (112) and at least part of the rod-shaped carrier element (111) and covering the at least part of the attachment device (112) and the at least part of the rod-shaped carrier element (111) when the back wall (116) is connected to the attachment device (112).

2. The aircraft according to claim 1, further comprising:
a second wall (117) forming a portion of a ceiling of a cabin of the aircraft and being connectable to a primary structure fastening element (130).

3. The aircraft according to claim 2, wherein the second wall is a ceiling of the overhead luggage compartment.

4. The aircraft according to claim 2 or 3, wherein at least one of the back wall (116) and the second wall (117) is arranged in a space (120) limited by an outer skin (200) and two primary structural elements (210) of the aircraft.

## Patentansprüche

1. Flugzeug, Folgendes umfassend:
ein Innenkomponententrägersystem (10), das an einer Primärstruktur des Flugzeugs eingebaut ist, wobei das Innenkomponententrägersystem (10) ein stabförmiges Trägerelement (111) und eine Befestigungsvorrichtung (112), die mit dem Trägerelement (111) gekoppelt ist, umfasst; und
ein Überkopf-Gepäckfach (114), Folgendes umfassend:
eine Rückwand (116), die mit der Befestigungsvorrichtung (112) des Innenkomponententrägersystems (10) verbunden ist,
wobei die Rückwand (116) eine Einbuchtung (118) aufweist, die vom Innenkomponententrägersystem (10) abgewandt ist, wobei die Einbuchtung eine Form aufweist, die zumindest zu einem Teil der Befestigungsvorrichtung (112) und zumindest einem Teil des stabförmigen Trägerelements (111) passt, und den mindestens einen Teil der Befestigungsvorrichtung (112) und den mindestens einen Teil des stabförmigen Trägerelements (111) abdeckt, wenn die Rückwand (116) mit der Befestigungsvorrichtung (112) verbunden ist.

2. Flugzeug nach Anspruch 1, ferner Folgendes umfassend:
eine zweite Wand (117), die einen Abschnitt einer Kabinendecke des Flugzeugs bildet und mit einem Primärstrukturfixierungselement (130) verbunden werden kann.

3. Flugzeug nach Anspruch 2, wobei die zweite Wand die Decke des Überkopf-Gepäckfachs ist.

4. Flugzeug nach Anspruch 2 oder 3, wobei die Rückwand (116) und/oder die zweite Wand (117) in einem Raum (120) angeordnet ist, der von einer Außenhaut (200) und zwei Primärstrukturelementen (210) des Flugzeugs begrenzt wird.

## Revendications

1. Aéronef, comprenant:
un système de support d'élément intérieur (10) installé sur une structure primaire de l'aéronef, le système de support d'élément intérieur (10) comprend un élément de support en forme de tige (111) et un dispositif de fixation (112) couplé à l'élément de support (111); et
un compartiment à bagages supérieur (114) comprenant:
- une paroi arrière (116) reliée au dispositif de fixation (112) du système de support d'élément intérieur (10),
la paroi arrière (116) présentant une indentation (118) dirigée à l'opposé du système de support d'élément intérieur (10), l'indentation ayant une forme correspondant à au moins une partie du dispositif de fixation (112) et à au moins une partie de l'élément de support en forme de tige (111) et couvrant l'au moins une partie du dispositif de fixation (112) et l'au moins une partie de l'élément de support en forme de tige (111) lorsque la paroi arrière (116) est reliée au dispositif de fixation (112).

2. Aéronef selon la revendication 1, comprenant en outre:
une seconde paroi (117) formant une partie d'un plafond d'une cabine de l'aéronef et pouvant être reliée à un élément de fixation de structure primaire (130).

3. Aéronef selon la revendication 2, dans lequel la seconde paroi est un plafond du compartiment à bagages supérieur.

4. Aéronef selon la revendication 2 ou 3, dans lequel au moins l'une de la paroi arrière (116) et de la seconde paroi (117) est disposée dans un espace (120) limité par un revêtement extérieur (200) et deux éléments structurels primaires (210) de l'aéronef.
